(19) **Europäisches Patentamt**
**European Patent Office**
**Office européen des brevets**

(11) **EP 1 051 016 B1**

(12) **EUROPÄISCHE PATENTSCHRIFT**

(45) Veröffentlichungstag und Bekanntmachung des Hinweises auf die Patenterteilung:
**03.01.2007  Patentblatt 2007/01**

(51) Int Cl.:
*H04M 3/42* *(2006.01)*       *H04M 3/493* *(2006.01)*

(21) Anmeldenummer: **00109618.9**

(22) Anmeldetag: **05.05.2000**

(54) **Verfahren zum Auffinden einer Kontaktperson oder zum Verbindungsaufbau zu dieser Kontaktperson**

Method for finding a contact person or for setting up a call to such contact person

Procédé pour trouver une personne de contact ou pour établissement d'une communication avec cette personne

(84) Benannte Vertragsstaaten:
**DE FR GB IT**

(30) Priorität: **05.05.1999  DE 19920737**

(43) Veröffentlichungstag der Anmeldung:
**08.11.2000  Patentblatt 2000/45**

(73) Patentinhaber: **SIEMENS AKTIENGESELLSCHAFT 80333 München (DE)**

(72) Erfinder:
• **Remmele, Werner 86415 Mering (DE)**
• **Schmiedel, Gabriele 83627 Warngau (DE)**

(56) Entgegenhaltungen:
**EP-A- 0 823 809          EP-A- 0 855 822**
**WO-A-97/35416**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Auffinden einer Kontaktperson innerhalb einer ersten Gruppe, die in Beziehung steht zu einem gewünschten Kommunikationspartner innerhalb einer durch erwartete Eigenschaften dieses Kommunikationspartners festgelegten zweiten Gruppe, bzw. ein Verfahren zum Verbindungsaufbau zu einer solchen Kontaktperson.

Die Erfindung befaßt sich mit einer Lösung für das Problem, daß ein Kommunikationsteilnehmer einen Kommunikationspartner wünscht, der bestimmte Eigenschaften hat. Solche Eigenschaften können beispielsweise Spezialkenntnisse auf einem bestimmten Gebiet sein, aber auch die Zugehörigkeit zu einer Organisation, zu einer Firma, zu einem bestimmten Bereich einer Firma wie dem Vertrieb, oder zu einem bestimmten Bereich der eigenen Firma.

Der Kommunikationsteilnehmer befindet sich üblicherweise innerhalb eines bestimmten Umfeldes, wie zum Beispiel seines Bekanntenkreises, seiner Firma, eines Vereins oder einer Organisation und kann mit großer Wahrscheinlichkeit erwarten, daß eine Person dieses Umfeldes in Beziehung steht mit einem Kommunikationspartner mit den gewünschten Eigenschaften.

Die vorliegende Erfindung befaßt sich speziell mit einer technischen Lösung zum Auffinden einer solchen Kontaktperson, die in Beziehung steht zu einem Kommunikationspartner mit bestimmten Eigenschaften.

Ein Verfahren mit den Merkmalen des Patentanspruches 1 ermöglicht das Auffinden einer solchen Kontaktperson. Ein Verfahren mit den Merkmalen des Patentanspruches 5 ermöglicht außerdem einen Verbindungsaufbau zu einer solchen Kontaktperson.

Die Erfindung geht davon aus, daß sowohl der suchende Teilnehmer, als auch die Personen einer ersten Gruppe jeweils einen Kommunikationsagenten mit bestimmten Eigenschaften haben. Ein solcher Kommunikationsagent, der einem bestimmten Teilnehmer zugeordnet ist, muß die Eigenschaft haben, Information mit anderen Kommunikationsagenten auszutauschen. Dies kann üblicherweise über ein Kommunikationsnetz oder über ein Datennetz erfolgen.

Zumindest die Kommunikationsagenten der Personen der ersten Gruppe müssen jeweils Zugriff auf ein Kommunikationspartnerverzeichnis mit Kommunikationspartnern des Teilnehmers haben, dem sie zugeordnet sind. In einem solchen Kommunikationspartnerverzeichnis sollten neben den Grunderfordernissen wie Kommunikationsadresse bzw. Rufnummer und Name eines Kommunikationspartners noch weitere Eigenschaften eintragbar sein.

Zumindest die Kommunikationsagenten, die den Mitgliedern der ersten Gruppe zugeordnet sind, benötigen eine Steuerung, um veranlaßt durch einen anderen Kommunikationsagenten die Einträge zumindest der genannten zusätzlichen Eigenschaften der Kommunikationspartner der Person, der sie jeweils zugeordnet sind, mit gewünschten Eigenschaften zu vergleichen. Hierbei kann gegebenenfalls ein Verknüpfen mehrerer Eigenschaften nach den Regeln der boolschen Algebra, also mit UND, ODER, UND NICHT, etc. vorgesehen sein. Darüber hinaus muß die Steuerung der Kommunikationsagenten mindestens der Personen der ersten Gruppe ausgestaltet sein, um bei positivem Vergleichsergebnis der genannten Eigenschaften eine Meldung an den Kommunikationsagenten zu übermitteln, der den Auftrag für den Vergleichsvorgang gegeben hatte. Diese Meldung kann sich gegebenenfalls auf den Namen und/oder eine oder mehrere Kommunikationsadressen der Person der ersten Gruppe beschränken, der der meldende Kommunikationsagent zugeordnet ist. Die Meldüng kann aber auch zusätzlich Information über den gefundenen Kommunikationspartner mit den gesuchten Eigenschaften enthalten.

Mindestens der Kommunikationsagent des eine Kontaktperson suchenden Teilnehmers muß eine Steuerung enthalten, um nach Eingabe der erwarteten Eigenschaften eines gewünschten Kommunikationspartners Anfragen bezüglich des Vorhandenseins von Kontaktpartnern mit den gesuchten Eigenschaften in Kommunikationsverzeichnissen von potentiellen Kontaktpersonen an Kommunikationsagenten dieser potentiellen Kontaktpersonen zu übermitteln. Darüber hinaus muß der Kommunikationsagent zumindest des eine Kontaktperson suchenden Teilnehmers eine Steuerung enthalten, um nach Erhalt einer positiven Rückmeldung von einem Kommunikationsagenten einer Kontaktperson Informationen bezüglich der gefundenen Kontaktperson an eine Mensch-Maschine-Schnittstelle auszugeben.

Wenn zusätzlich zum Ausgeben der Information auch ein Verbindungsaufbau zu einer solchen Kontaktperson gewünscht ist, benötigt der Kommunikationsagent zumindest des eine Kontaktperson suchenden Teilnehmers außerdem eine Steuerung zum Veranlassen eines solchen Verbindungsaufbaus.

Die erste Gruppe, innerhalb der ein erfindungsgemäßes Verfahren eine Kontaktperson sucht, kann entweder vorbestimmt festgelegt sein, oder administrativ bzw. durch einen suchenden Teilnehmer bedarfsweise festgelegt werden. Es ist auch möglich, daß die erste Gruppe aus einer Vielzahl von möglichen Personengruppen ausgewählt wird bzw. aus der Summe mehrerer festgelegter Personengruppen besteht. Solche Personengruppen bzw. die erste Gruppe sind beispielsweise bezogen auf einen suchenden Teilnehmer alle Kommunikationspartner der eigenen Firma des suchenden Teilnehmers oder eines bestimmten Bereichs dieser Firma, alle Personen einer Organisation, der auch der Teilnehmer angehört, die Mitglieder einer Arbeitsgruppe, die Mitglieder einer Projektgruppe oder auf einem bestimmten Tätigkeitsgebiet arbeitende Personen. Falls die Mitglieder der ersten Gruppe durch den suchenden Teilnehmer festlegbar sind, kann auch vorgesehen sein, daß zum Definieren der ersten Gruppe Mitglieder mehrerer vordefinierter Gruppen nach den Regeln der boolschen Algebra, beispielsweise mit Hilfe von UND- oder ODER-Verknüpfungen ausgewählt werden.

Beispielsweise kann die erste Gruppe aus allen Mitarbeitern der Firma des suchenden Teilnehmers bestehen, die Mitglied in einer übergeordneten Organisation sind, also durch eine UND-Verknüpfung zwischen den Mitarbeitern der Firma und den Mitgliedern der Organisation festgelegt werden. Auch durch eine ODER-Verknüpfung, beispielsweise zwischen allen Mitgliedern des persönlichen Kommunikationspartnerverzeichnisses des suchenden Teilnehmers und allen Mitarbeitern seiner Firma, kann die erste Gruppe potentieller Kontaktpersonen definiert werden.

Einem erfindungsgemäßen Verfahren zum Auffinden einer Kontaktperson und einem erfindungsgemäßen Verfahren zum Verbindungsaufbau zu einer Kontaktperson innerhalb einer ersten Gruppe, deren Mitglieder in Beziehung stehen zu einem gewünschten Kommunikationspartner innerhalb einer durch erwartete Eigenschaften dieses Kommunikationspartners festgelegten zweiten Gruppe, sind folgende Verfahrensschritte gemeinsam:

Die erwarteten Eigenschaften des gewünschten Kommunikationspartners der zweiten Gruppe, also die Definition der zweiten Gruppe, wird von einem suchenden Teilnehmer in den ihm zugeordneten Kommunikationsagenten eingegeben. Dieser dem suchenden Teilnehmer zugeordnete Kommunikationsagent übermittelt Anfragen unter Angaben der erwarteten Eigenschaften an eine Vielzahl von Kommunikationsagenten, die jeweils Personen innerhalb der ersten Gruppe zugeordnet sind. Die einzelnen Kommunikationsagenten, die jeweils Kommunikationspartnern der ersten Gruppe zugeordnet sind, überprüfen jeweils eine Kommunikationspartnerdatei der Person, der sie zugeordnet sind, auf Einträge von Kommunikationspartnern mit den gewünschten Eigenschaften. Falls ein solcher Eintrag gefunden worden ist, übermittelt der Kommunikationsagent, der diesen Eintrag gefundenen hat, Informationen bezüglich der als Kontaktperson gefundenen Person, der er zugeordnet ist, an den Kommunikationsagenten des suchenden Teilnehmers.

Der Kommunikationsagent des suchenden Teilnehmers gibt Informationen bezüglich der gefundenen Kontaktperson aus.

Bei einem erfindungsgemäßen Verfahren zum Auffinden einer Kontaktperson erfolgt die Ausgabe der Information bezüglich der gefundenen Kontaktperson an eine Mensch-Maschine-Schnittstelle, beispielsweise eine Anzeigeeinrichtung oder eine Ansageeinrichtung. Die Anzeigeeinrichtung kann hierbei auch eine interaktive Benutzeroberfläche sein.

Bei einem Verfahren zum Verbindungsaufbau zu einer Kontaktperson innerhalb der ersten Gruppe ist zwar die Ausgabe der Information bezüglich der gefundenen Kontaktperson über eine solche Mensch-Maschine-Schnittstelle möglich, aber nicht zwingend erforderlich. Es ist gegebenenfalls auch eine Ausgabe der Information an eine Kommunikationssteuereinheit möglich, die einen gewünschten Verbindungsaufbau veranlaßt. Das Verfahren zum Verbindungsaufbau zu einer Kontaktperson innerhalb einer ersten Gruppe, die in Beziehung steht zu einem gewünschten Kommunikationspartner innerhalb einer zweiten Gruppe, unterscheidet sich von dem Verfahren zum Auffinden einer solchen Kontaktperson auch durch den zusätzlichen Verfahrensschritt, daß der suchende Teilnehmer den ihm zugeordneten Kommunikationsagenten zum Verbindungsaufbau zu einer solchen Kontaktperson auffordert.

Ein beschriebenes Verfahren zum Auffinden einer Kontaktperson bzw. zum Verbindungsaufbau zu einer solchen Kontaktperson ermöglicht das Einbeziehen vieler potentieller Kontaktpersonen in die Suche, ohne diese Kontaktpersonen zu belästigen. Bei einem erfindungsgemäßen Verfahren erfährt üblicherweise nur die eine Kontaktperson, zu der der suchende Teilnehmer tatsächlich Kontakt aufnimmt, von einem durchgeführten Suchvorgang. Selbst wenn mehrere Kontaktpersonen der ersten Gruppe in Beziehung stehen mit Kommunikationspartnern mit den gewünschten Eigenschaften, werden im Normalfall nur wenige, im Optimalfall nur eine dieser Kontaktpersonen kontaktiert. Trotzdem kann gegebenenfalls die Auswahl aus einer sehr großen Zahl von potentiellen Kontaktpersonen getroffen werden, so daß die Chance, ein positives Suchergebnis zu erhalten, sehr groß ist.

Vorzugsweise kann ein Teilnehmer für jede Information jedes Datensatzes seiner Kommunikationspartnerdatei festlegen, ob diese Information für Kommunikationsagenten anderer Teilnehmer erkennbar sein darf oder ob diese Information privat und damit nach außen nicht sichtbar sein soll. Hierbei kann auch ein kompletter Datensatz als privat und somit als nicht zugänglich gekennzeichnet sein. Solche als privat gekennzeichnete Datensätze oder Informationen werden bei einer Suchanfrage vom Kommunikationsagenten des entsprechenden Teilnehmers nicht berücksichtigt und somit nicht an einen einem suchenden Teilnehmer zugeordneten Kommunikationsagenten übermittelt. Jeder Teilnehmer legt hierbei fest, welche von ihm gespeicherten Informationen für allgemeine Suchanfragen zur Verfügung stehen, also Dritten zugänglich sind. In einem solchen Falle ist sichergestellt, daß erfindungsgemäße Suchverfahren nur Ergebnisse liefern, die im Einverständnis mit den einzelnen Personen der ersten Gruppe ermittelt werden.

Eine günstige Ausgestaltungsform eines erfindungsgemäßen Verfahrens zum Auffinden einer Kontaktperson sieht vor, daß der Kommunikationsagent des suchenden Teilnehmers Informationen bezüglich mehrerer gefundener Kontaktpersonen der ersten Gruppe ausgibt. In einer Weiterbildung eines solchen erfindungsgemäßen Verfahrens zum Auffinden einer Kontaktperson enthält die Information bezüglich einer gefundenen Kontaktperson der ersten Gruppe jeweils Informationen über die Art der Beziehung zwischen dieser Kontaktperson und dem Kommunikationspartner mit den erwarteten Eigenschaften. In dieser oder einer anderen Weiterbildung der genannten Ausgestaltungsform eines erfindungsgemäßen Verfahrens zum Auffinden einer Kontaktperson enthält die Informationen bezüglich der gefundenen Kontaktpersonen der ersten Gruppe jeweils Informationen über die Kommunikationspartner der zweiten Gruppe, mit denen die Kontaktperson in Beziehung steht.

Die genannten Informationen bezüglich der gefundenen Kontaktpersonen können selbstverständlich auch übermittelt werden, wenn der Kommunikationsagent des suchenden Teilnehmers nur Informationen bezüglich einer gefundenen Kontaktperson der ersten Gruppe ausgibt. Wenn der Kommunikationsagent des suchenden Teilnehmers jedoch Informationen bezüglich mehrerer gefundener Kontaktpersonen der ersten Gruppe ausgibt, erleichtert die Information über die Art der Beziehung zwischen Kontaktperson und Kommunikationspartner der zweiten Gruppe bzw. die Information über die Kommunikationspartner der zweiten Gruppe dem suchenden Teilnehmer das Auswählen einer bevorzugten Kontaktperson der ersten Gruppe.

Die Art der Beziehung zwischen einer Kontaktperson und einem Kommunikationspartner der zweiten Gruppe kann beispielsweise die Zugehörigkeit zu einer gemeinsamen Organisation, die Zugehörigkeit einer gemeinsamen Arbeitsgruppe, eine Käufer-Verkäufer- bzw. Verkäufer-Käufer-Beziehung oder eine Dienstleister-Kunde-Beziehung sein.

Die zusätzliche Information über den Kommunikationspartner der zweiten Gruppe kann beispielsweise aus einer Information über die Zugehörigkeit zu einer Organisation, aus einer hierarchischen Information, aus einer Information über die Aufgabe des gefundenen Kommunikationspartners innerhalb einer Organisation, einer Firma oder einer Firmenabteilung sein oder eine Information über unterschiedliche Kommunikationsmöglichkeiten mit dem gefundenen Kommunikationspartner.

Eine günstige Ausgestaltungsform eines erfindungsgemäßen Verfahrens zum Verbindungsaufbau zu einer Kontaktperson sieht vor, daß die Ausgabe von Informationen bezüglich der gefundenen Kontaktperson der ersten Gruppe durch den Kommunikationsagent des suchenden Teilnehmers mit Hilfe von Schriftzeichen auf einer Anzeigeeinheit erfolgt. Diese Anzeigeeinheit kann hierbei auch Teil einer interaktiven Benutzeroberfläche sein. Jedenfalls ist bei der genannten Ausgestaltungsform eines Verfahrens zum Verbindungsaufbau eine Eingabeeinrichtung zum Eingeben einer Bestätigungsmeldung erforderlich. Die genannte Ausführungsform eines erfindungsgemäßen Verfahren zum Verbindungsaufbau zu einer Kontaktperson sieht hierbei vor, daß nach Ausgabe der Information bezüglich der gefundenen Kontaktperson der ersten Gruppe mit Hilfe von Schriftzeichen auf einer Anzeigeeinheit das Veranlassen eines Verbindungsaufbaus erst nach einer Bestätigungseingabe des Teilnehmers erfolgt.

Durch diese Ausgestaltungsform eines erfindungsgemäßen Verfahrens ist es dem Teilnehmer möglich, wahlweise einen Verbindungsaufbau zu unterbinden oder den Zeitpunkt für einen Verbindungsaufbau selbst festzulegen, nachdem er die angezeigte Information über die Kontaktperson ausgewertet hat.

Eine Weiterbildung der beschriebenen Ausgestaltungsform eines erfindungsgemäßen Verfahrens zum Verbindungsaufbau sieht vor, daß der Kommunikationsagent des suchenden Teilnehmers Informationen bezüglich mehrerer gefundener Kontaktpersonen der ersten Gruppe ausgibt, daß der Teilnehmer eine der gefundenen Kontaktpersonen, zu der ein Verbindungsaufbau veranlaßt werden soll, auswählen kann und daß eine der gefundenen Kontaktpersonen durch den Kommunikationsagenten des suchenden Teilnehmers vorausgewählt ist.

Diese Ausgestaltungsform eines erfindungsgemäßen Verfahrens ermöglicht es dem suchenden Teilnehmer, anhand der bereit gestellten Information über die Kontaktpersonen oder gegebenenfalls über die Kommunikationspartner, mit denen diese Kontaktpersonen in Beziehungen stehen, eine Kontaktperson selbst auszuwählen. Das Auswählen kann hierbei entweder mit Hilfe einer Aufwärtstaste, einer Abwärtstaste, einer Cursorbetätigungseinrichtung wie zum Beispiel einer Maus oder mit Hilfe eines Drehrades ausgeführt werden.

Dadurch, daß der Kommunikationsagent des suchenden Teilnehmers eine gefundene Kontaktperson vorausgewählt hat, kann der suchende Teilnehmer allein durch Betätigen eines Bestätigungseingabemittels, also ohne vorheriges Auswählen, einen Verbindungsaufbau veranlassen.

Eine besonders günstige Ausführungsform eines Verfahrens zum Verbindungsaufbau zu einer Kontaktperson sieht vor, daß die Information bezüglich der gefundenen Kontaktpersonen der ersten Gruppe jeweils Informationen über die Art der Beziehung zwischen der Kontaktperson und Kommunikationspartnern der zweiten Gruppe enthält. Eine andere günstige Ausgestaltungsform eines erfindungsgemäßen Verfahrens zum Verbindungsaufbau zu einer Kontaktperson sieht vor, daß die Information bezüglich gefundener Kontaktpersonen der ersten Gruppe jeweils Informationen über die entsprechenden Kommunikationspartner der zweiten Gruppe beinhaltet, mit denen die Kontaktperson in Beziehung steht.

Die Vorteile dieser Ausgestaltungsformen wurden bereits weiter oben im Zusammenhang mit einem Verfahren zum Auffinden einer Kontaktperson beschrieben.

Ein günstiges Verfahren zum Auffinden von Kontaktpersonen und auch ein günstiges Verfahren zum Verbindungsaufbau zu einer solchen Kontaktperson sieht jeweils vor, daß in dem dem suchenden Teilnehmer zugeordneten Kommunikationsagenten mehrere eingegebene erwartete Eigenschaften des gewünschten Kommunikationspartners der zweiten Gruppe nach Regeln boolscher Algebra verknüpft werden. Dies bedeutet beispielsweise, daß mehrere Eigenschaften sowohl UND-verknüpft werden können als auch ODER-verknüpft, aber auch UND-NICHT-verknüpft, etc.

Daß mehrere erwartete Eigenschaften des gewünschten Kommunikationspartners der zweiten Gruppe in dem dem suchenden Teilnehmer zugeordneten Kommunikationsagenten nach Regeln boolscher Algebra verknüpft werden, kann einerseits bedeuten, daß die boolsche Verknüpfung der Eigenschaften im Kommunikationsagenten des suchenden Teilnehmers in die an Kommunikationsagenten von Mitgliedern der ersten Gruppe zu übermittelnde Meldung eingearbeitet werden. In diesem Fall muß diese, eine Verknüpfung enthaltende Meldung von den den Mitgliedern der ersten Gruppe zugeordneten Kommunikationsagenten verstanden werden. Da die Anzahl der von diesen Kommunikationsagenten zu verstehenden Meldungen üblicherweise begrenzt ist, sind in diesem Falle nur standardisierte Suchvorgänge, das heißt Suchvorgänge mit einem festgelegten Satz von erwarteten Eigenschaften und festgelegten Verknüpfungen möglich.

Das Verknüpfen mehrerer eingegebener erwarteter Eigenschaften des gewünschten Kommunikationspartners der zweiten Gruppe in dem dem suchenden Teilnehmer zugeordneten Kommunikationsagenten nach Regeln boolscher Algebra kann jedoch auch bedeuten, daß der dem suchenden Teilnehmer zugeordnete Kommunikationsagent sowohl die eingegebenen Eigenschaften, als auch die zugehörigen Verknüpfungsvorschriften zu den den Mitgliedern der ersten Gruppe zugeordneten Kommunikationsagenten übermittelt und daß die jeweilige Verknüpfung der übermittelten Eigenschaften nach den übermittelten Regeln der boolschen Algebra in den den Mitgliedern der ersten Gruppe zugeordneten Kommunikationsagenten vorgenommen wird.

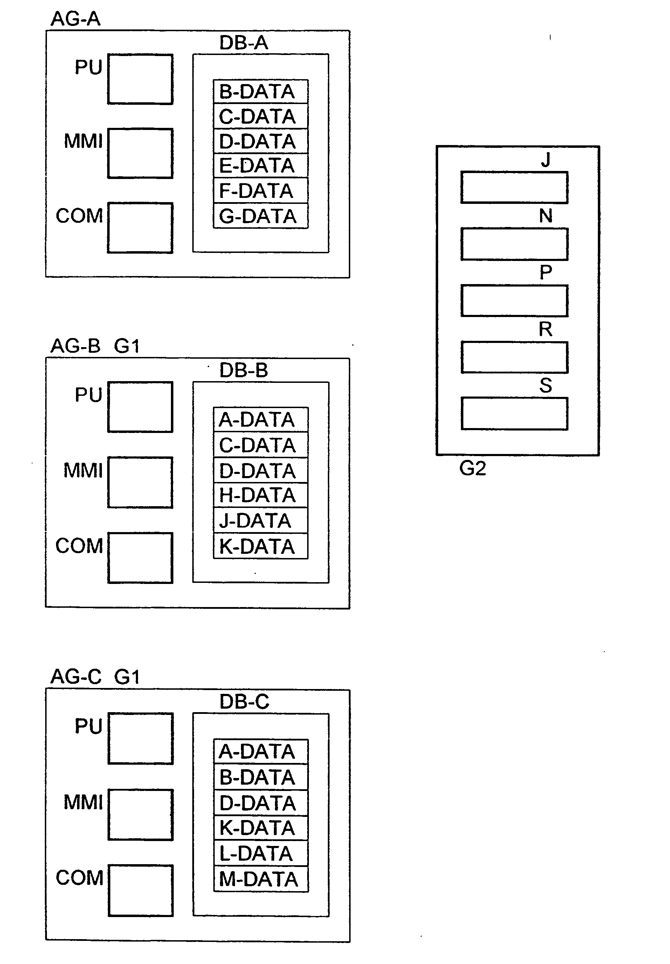

Nachstehend wird die Erfindung anhand von Beispielen eines Verfahrens zum Verbindungsaufbau zu einer Kontaktperson unter Bezugnahme auf die Figur näher erläutert, wobei Verfahren zum Auffinden einer Kontaktperson eingebunden sind.

Die Figur zeigt in schematischer Blockdarstellung einen einem suchenden Teilnehmer zugeordneten Kommunikationsagenten, Teilnehmern einer ersten Gruppe zugeordnete Kommunikationsagenten sowie Teilnehmer einer zweiten Gruppe.

Ein in der Figur gezeigter Kommunikationsagent AG-A ist einem nicht explizit dargestellten Teilnehmer A zugeordnet, der eine Kontaktperson zu einem Kommunikationspartner mit bestimmten Eigenschaften sucht bzw. einen Verbindungsaufbau zu dieser Kontaktperson wünscht.

Zwei weitere in der Figur dargestellte Kommunikationsagenten AG-B/G1 und AG-C/G1 sind nicht explizit dargestellten Teilnehmern B und C zugeordnet, die eine erste Gruppe bilden, innerhalb der die gewünschte Kontaktperson gesucht wird.

Die schematisch dargestellten Kommunikationsagenten AG-A, AG-B/G1 und AG-C/G1 enthalten jeweils eine Steuereinheit PU, eine Mensch-Maschine-Schnittstelle MMI, eine Kommunikationseinheit COM sowie jeweils eine spezifische Kommunikationspartnerdatei DB-A, DB-B und DB-C mit Datensätzen von Eigenschaften bestimmter Kommunikationspartner. So enthält der Kommunikationsagent AG-A Datensätze B-DATA, C-DATA, D-DATA, E-DATA, F-DATA und G-DATA mit Eigenschaften von nicht unbedingt dargestellten Teilnehmern B, C, D, E, F und G. Der Kommunikationsagent AG-B/G1 enthält Datensätze A-DATA, C-DATA, D-DATA, H-DATA, J-DATA und K-DATA mit Eigenschaften von nicht unbedingt dargestellten Teilnehmern A, C, D, H, J und K. Der Kommunikationsagent AG-C/G1 enthält Datensätze A-DATA, B-DATA, D-DATA, K-DATA, L-DATA und M-DATA mit Eigenschaften von nicht unbedingt dargestellten Teilnehmern A, B, D, K, L, und M.

Die einzelnen Kommunikationsagenten AG-A, AG-B/G1 und AG-C/G1 können jeweils mit Hilfe ihrer Kommunikationseinheiten COM und einem nicht dargestellten Kommunikationsnetz miteinander kommunizieren. Ein solches Kommunikationsnetz kann beispielsweise ein Datennetz sein, das auch LAN oder WAN genannt wird. Außerdem kann ein solches Kommunikationsnetz ein Internetprotokoll-Netz sein, ein Mobilfunknetz oder ein drahtgebundenes ISDN-Netz.

Die Figur zeigt außerdem in schematischer Darstellung Teilnehmer J, N, P, R und S, die zusammen eine zweite Gruppe bilden. Die Teilnehmer dieser zweiten Gruppe haben Eigenschaften, die vom Teilnehmer A, dem der Kommunikationsagent AG-A zugeordnet ist, von einem Kommunikationspartner erwartet werden. Diese erwarteten Eigenschaften müßten in den Datensätzen J-DATA der Kommunikationsagenten AG-B/G1 und AG-C/G1 enthalten sein, falls der Teilnehmer B beziehungsweise C, dem dieser Kommunikationsagent AG-B/G1 beziehungsweise AG-C/G1 zugeordnet ist, zu dem gesuchten Kommunikationspartner Kontakte pflegt. Ein solcher Teilnehmer B, C der ersten Gruppe wäre dann eine gesuchte Kontaktperson, zu der der Teilnehmer A einen Verbindungsaufbau wünscht.

Die Anzahl der Mitglieder der ersten Gruppe sowie die Anzahl der Mitglieder der zweiten Gruppe G2 sind selbstverständlich nicht auf zwei beziehungsweise fünf beschränkt.

Bei einem ersten Ausführungsbeispiel wird davon ausgegangen, daß die Kommunikationsagenten AG-A, AG-B/G1 und AG-C/G1 ausgestaltet sind, um Suchanfragen, in denen Eigenschaften von Kommunikationspartnern mit Hilfe von Booleschen Operatoren wie UND, ODER und NICHT verknüpft sind, zu verstehen und auszuführen. Außerdem enthalten die Datensätze A-DATA, C-DATA, D-DATA, H-DATA, J-DATA, K-DATA, L-DATA und M-DATA Informationen bezüglich der Kommunikationspartnereigenschaften NAME, FIRMA, GESCHÄFTSGEBIET, FUNKTION, KENNTNISSE und KONTAKTDATUM.

Ein Teilnehmer A möchte einen Kommunikationspartner innerhalb einer Firma X kontaktieren, der Kenntnisse bezüglich eines Produktes Y hat. Er zieht es jedoch vor, zuerst einen Mitarbeiter seiner eigenen Firma zu kontaktieren, der bereits Kontakte zu der Firma X hat.

Der Teilnehmer A, der einen Verbindungsaufbau zu einer Kontaktperson wünscht, definiert für dieses Beispiel als Teilnehmer der ersten Gruppe, innerhalb derer er diese Kontaktperson erhofft, alle Mitarbeiter seiner eigenen Firma,

5

die in seinem Geschäftsgebiet tätig sind. Wenn der Teilnehmer A innerhalb der Firma Siemens AG im Geschäftsgebiet Mobilfunk tätig ist, gibt er folglich in den ihm zugeordneten Kommunikationsagenten AG-A mit Hilfe der Mensch-Maschine-Schnittstelle MMI, z.B. einer Tastatur, als Eigenschaften der Mitglieder der Gruppe 1 ein:

```
FIRMA = Siemens AG UND GESCHÄFTSGEBIET = Mobilfunk.
```

Als Eigenschaften des gewünschten Kommunikationspartners der zweiten Gruppe kann der Teilnehmer A beispielsweise in den ihm zugeordneten Kommunikationsagenten AG-A eingeben:

```
Firma = X.
```

Gemäß der Figur haben folglich die Teilnehmer J, N, P, R und S diese Eigenschaft, bei der Firma X beschäftigt zu sein.

Wenn der Teilnehmer A nun über die Mensch-Maschine-Schnittstelle MMI dem ihm zugeordneten Kommunikationsagenten AG-A den Befehl erteilt, eine Verbindung zu einem Mitglied der ersten Gruppe aufzubauen, das Kontakte zu einem Mitglied der zweiten Gruppe hat, übermittelt der Kommunikationsagent AG-A mit Hilfe seiner Kommunikationseinheit COM eine entsprechende Anfrage an die Kommunikationsagenten AG-B/G1 und AG-C/G1 der Teilnehmer der ersten Gruppe. Diese Kommunikationsagenten AG-B/G1 und AG-C/G1 empfangen mit Hilfe ihrer Kommunikationseinheiten COM die Anfrage und ihre Steuereinheiten PU veranlassen jeweils das Überprüfen der Kommunikationspartnerdatei DB-B beziehungsweise DB-C auf Einträge von Kommunikationspartnern der zweiten Gruppe mit den gewünschten Eigenschaften Firma = X.

Falls ein solcher Eintrag vorhanden ist, hier J-DATA der Kommunikationspartnerdatei DB-B, übermittelt der Kommunikationsagent AG-B/G1 Informationen bezüglich des als Kontaktperson gefundenen Teilnehmers B der ersten Gruppe, dem dieser Kommunikationsagent zugeordnet ist, über die Kommunikationseinheiten COM und ein nicht dargestelltes Netz an den Kommunikationsagenten AG-A des suchenden Teilnehmers A.

Falls kein solcher Eintrag vorhanden ist, könnte jeweils die Steuereinheit PU des Kommunikationsagent AG-B/G1, AG-C/G1 auf eine Meldung an den Kommunikationsagenten AG-A verzichten. In diesem Falle würde die Steuereinheit PU des Kommunikationsagent AG-A nach Ablauf einer bestimmten Zeit eine Anzeige der Mensch-Maschine-Schnittstelle MMI veranlassen, um darzustellen, daß keine Kontaktperson gefunden worden ist. Im beschriebenen Beispiel wird jedoch davon ausgegangen, daß die Steuereinheit PU jedes Kommunikationsagenten AG-B/G1, AG-C/G1 der Teilnehmer der ersten Gruppe bei fehlender Übereinstimmung diese Nichtübereinstimmung zwischen gesuchten Eigenschaften von Teilnehmern der zweiten Gruppe G2 und gespeicherten Eigenschaften von Kommunikationspartnern an den Kommunikationsagenten AG-A des suchenden Teilnehmers A übermittelt.

Die Steuereinheit PU des Kommunikationsagenten AG-A des suchenden Teilnehmers A gibt Information bezüglich der gefundenen Kontaktperson B der ersten Gruppe an die Mensch-Maschine-Schnittstelle MMI des Kommunikationsagenten AG-A aus. Außerdem wird ein Verbindungsaufbau veranlaßt. Falls Informationen von mehr als einer Kontaktperson der ersten Gruppe an den Kommunikationsagenten AG-A des suchenden Teilnehmers A übermittelt wird, kann der Teilnehmer A aufgefordert werden, eine Kontaktperson auszuwählen, zu der eine Verbindung aufgebaut werden soll. Die Steuereinheit PU des Kommunikationsagenten AG-A kann aber auch selbst eine Auswahl treffen. So könnte beispielsweise zu der ersten gemeldeten Kontaktperson eine Verbindung aufgebaut werden.

Im beschriebenen Fall werden alle möglichen Kontaktpersonen der ersten Gruppe an den Kommunikationsagenten AG-A gemeldet, die in ihrer Kommunikationspartnerdatei DB-B, DB-C einen zur Suche freigegebenen Kommunikationspartner der Firma X eingetragen haben. Diese Kommunikationspartner der Firma X müssen nicht unbedingt Auskunft über das Produkt Y geben können. Eine etwas höhere Treffsicherheit könnte durch Eingabe folgender gewünschter Eigenschaften der Mitglieder der zweiten Gruppe G2 erzielt werden:

```
FIRMA = X UND (FUNKTION = Vertrieb ODER FUNKTION = Marke-
                         ting).
```

Falls auch diese Anfrage mehrere mögliche Kontaktpersonen innerhalb der ersten Gruppe liefert, könnten noch folgende gewünschte Eigenschaften der Mitglieder der zweiten Gruppe G2 vom Teilnehmer A eingegeben werden:

FIRMA = X UND KENNTNISSE = Produkt Y.

Falls der suchende Teilnehmer A vorzugsweise Kontaktpersonen sucht, die in jüngster Zeit Kontakt zu Mitarbeitern der Firma X hatten, kann eine einzugebende Eigenschaft der Mitglieder der zweiten Gruppe G2 sein:

FIRMA = X UND KONTAKTDATUM > 01.12.1998.

Vorzugsweise beinhaltet die dem Kommunikationsagenten AG-A übermittelte und von diesem ausgegebene Information bezüglich der Kontaktperson aus der ersten Gruppe auch Information über den Kommunikationspartner dieser Kontaktperson aus der zweiten Gruppe G2.

Bei einem zweiten Ausführungsbeispiel wird davon ausgegangen, daß die Kommunikationsagenten AG-A, AG-B/G1 und AG-C/G1 ausgestaltet sind, um Suchanfragen, in denen Eigenschaften von Kommunikationspartnern mit Hilfe von Booleschen Operatoren wie UND, ODER und NICHT verknüpft sind, zu verstehen und auszuführen. Außerdem enthalten die Datensätze A-DATA, C-DATA, D-DATA, H-DATA, J-DATA, K-DATA, L-DATA und M-DATA Informationen bezüglich der Kommunikationspartnereigenschaften NAME, FIRMA, GESCHÄFTSGEBIET, FUNKTION und KOMMUNIKATIONSART.

In diesem zweiten Beispiel möchte der Teilnehmer A, dem der Kommunikationsagent AG-A zugeordnet ist, wissen, welcher seiner Kollegen die neue Kommunikationsart Internet-Telefonie für externe Geschäftskontakte nutzt und demzufolge Auskunft über Zuverlässigkeit und Qualität dieser Kommunikationsart geben kann.

Analog zum vorstehenden Beispiel beauftragt der Teilnehmer A seinen Kommunikationsagent AG-A, ihm Kontaktpersonen innerhalb der eigenen Firma zu nennen, die externe Verbindungen mit der Kommunikationsart Internet-Telefonie hatten. Als Eigenschaften der Mitglieder der ersten Gruppe wird mit Hilfe der Mensch-Maschine-Schnittstelle MMI am Kommunikationsagenten AG-A beispielsweise eingegeben:

FIRMA = Siemens AG.

Die Eigenschaften der zweiten Gruppe könnten hierzu sein:

FIRMA NICHT Siemens AG

UND KOMMUNIKATIONSART = Internet-Telefonie

UND KOMMUNIKATIONSART = Internet-Telefonie

Eine solche Suche liefert in oben beschriebener Weise die Kontaktpersonen innerhalb der eigenen Firma, die zu mindestens einem externen Kommunikationspartner via Internet-Telefonie eine Verbindung aufgebaut haben. Hierzu übermitteln die diesen Kontaktpersonen zugeordneten Kommunikationsagenten AG-B/G1 Informationen bezüglich dieser Kontaktpersonen an den Kommunikationsagenten AG-A. Die Steuereinheit PU dieses Kommunikationsagenten AG-A veranlaßt die Ausgabe dieser Information über die Mensch-Maschine Schnittstelle MMI des Kommunikationsagenten AG-A. Der Teilnehmer A kann dann eine Kontaktperson für einen Verbindungsaufbau auswählen.

Die Mitglieder der ersten Gruppe kann der Teilnehmer A beispielsweise durch Abfragen seiner eigenen Kommunikationspartnerdatei oder einer allgemeinen Firmenkommunikationspartnerdatei ermitteln.

**Patentansprüche**

1. Verfahren zum Auffinden einer Kontaktperson innerhalb einer ersten Gruppe, die in Beziehung stehen zu einem gewünschten Kommunikationspartner (J) innerhalb einer durch erwartete Eigenschaften dieses Kommunikationspartners festgelegten zweiten Gruppe (G2), mit den folgenden Verfahrensschritten:

   - Eingeben der erwarteten Eigenschaften des gewünschten Kommunikationspartners (J) der zweiten Gruppe (G2) in einen einem suchenden Teilnehmer zugeordneten Kommunikationsagenten (AG-A);

- Übermitteln von Anfragen unter Angaben dieser erwarteten Eigenschaften an eine Vielzahl von Kommunikationsagenten (AG-B/G1, AG-C/G1), die jeweils Personen innerhalb der ersten Gruppe zugeordnet sind, durch den dem suchenden Teilnehmer zugeordneten Kommunikationsagenten (AG-A);

- Überprüfen einer Kommunikationspartnerdatei (DB-B, DB-C) der einzelnen Personen der ersten Gruppe durch den diesen Personen jeweils zugeordneten Kommunikationsagenten (AG-B/G1, AG-C/G1) auf Einträge von Kommunikationspartnern (J) der zweiten Gruppe (G2) mit den gewünschten Eigenschaften;

- falls ein solcher Eintrag vorhanden ist, Übermitteln von Informationen bezüglich des als Kontaktperson gefundenen Teilnehmers der ersten Gruppe, dem der entsprechende Kommunikationsagent (AG-B/G1) zugeordnet ist, durch diesen Kommunikationsagenten (AG-B/G1) an den Kommunikationsagenten (AG-A) des suchenden Teilnehmers;

- Ausgabe von Information bezüglich der gefundenen Kontaktperson der ersten Gruppe durch den Kommunikationsagenten (AG-A) des suchenden Teilnehmers an eine Mensch-Maschine-Schnittstelle (MMI).

2. Verfahren zum Auffinden einer Kontaktperson nach Anspruch 1,
   wobei der Kommunikationsagent (AG-A) des suchenden Teilnehmers Information bezüglich mehrerer gefundener Kontaktpersonen der ersten Gruppe ausgibt.

3. Verfahren zum Auffinden einer Kontaktperson nach Anspruch 2,
   wobei die Information bezüglich mehrerer gefundener Kontaktpersonen der ersten Gruppe jeweils Information über die Art der Beziehung zwischen der Kontaktperson und Kommunikationspartnern (J) der zweiten Gruppe (G2) beinhaltet.

4. Verfahren zum Auffinden einer Kontaktperson nach Anspruch 2 oder 3,
   wobei die Information bezüglich mehrerer gefundener Kontaktpersonen der ersten Gruppe jeweils Information über die Kommunikationspartner (J) der zweiten Gruppe (G2) beinhaltet, mit denen die Kontaktperson in Beziehung steht.

5. Verfahren zum Verbindungsaufbau zu einer Kontaktperson nach Anspruch 1, mit den folgenden zusätzlichen Verfahrensschritten:

   - Auffordern zum Verbindungsaufbau zu einer Kontaktperson innerhalb der ersten Gruppe;

   und Veranlassen eines Verbindungsaufbaus zu der gefundenen Kontaktperson der ersten Gruppe.

6. Verfahren zum Verbindungsaufbau zu einer Kontaktperson nach Anspruch 5,
   wobei die Ausgabe von Information bezüglich der gefundenen Kontaktperson der ersten Gruppe durch den Kommunikationsagenten (AG-A) des suchenden Teilnehmers mit Hilfe von Schriftzeichen auf einer Anzeigeeinheit erfolgt und das Veranlassen eines Verbindungsaufbaus nach einer Bestätigungseingabe des Teilnehmers erfolgt.

7. Verfahren zum Verbindungsaufbau zu einer Kontaktperson nach Anspruch 6,
   wobei der Kommunikationsagent (AG-A) des suchenden Teilnehmers Information bezüglich mehrerer gefundener Kontaktpersonen der ersten Gruppe ausgibt,
   wobei der Teilnehmer eine der gefundenen Kontaktpersonen, zu der ein Verbindungsaufbau veranlaßt werden soll, auswählen kann, und
   wobei eine der gefundenen Kontaktpersonen durch den Kommunikationsagenten des suchenden Teilnehmers vorausgewählt ist.

8. Verfahren zum Verbindungsaufbau zu einer Kontaktperson nach Anspruch 7,
   wobei die Information bezüglich mehrerer gefundener Kontaktpersonen der ersten Gruppe jeweils Information über die Art der Beziehung zwischen der Kontaktperson und Kommunikationspartnern (J) der zweiten Gruppe (G2) beinhaltet.

9. Verfahren zum Verbindungsaufbau zu einer Kontaktperson nach Anspruch 7 oder 8,
   wobei die Information bezüglich mehrerer gefundener Kontaktpersonen der ersten Gruppe jeweils Information über die Kommunikationspartner (J) der zweiten Gruppe (G2) beinhaltet, mit denen die Kontaktperson in Beziehung steht.

10. Verfahren nach einem der vorhergehenden Ansprüchen, wobei mehrere eingegebene erwartete Eigenschaften des gewünschten Kommunikationspartners (J) der zweiten Gruppe (G2) nach Regeln boolscher Algebra verknüpft werden.

**EP 1 051 016 B1**

**Claims**

1. Method for finding a contact within a first group who is linked to a desired communications partner (J) within a second group (G2) which is defined by desired properties of the communications partner, with the following method steps:

   - Entering desired properties of a desired communications partner (J) of the second group (G2) into a communication agent associated with a searching subscriber (AG-A);
   - Transmitting inquires specifying these desired properties from the communication agent (AG-A) associated with the searching subscriber to a multiplicity of further communication agents (AG-B/G1, AG-C/G1) each associated with persons within the first group;
   - Checking a communications partner file (DB-B, DB-C) of each of the persons in the first group for entries of communications partners (J) in the second group (G2) having the desired properties via the further communication agents (AG-B/G1, AG-C/G1) associated with the persons;
   - Transmitting information regarding a found subscriber in the first group, who has been determined to be a contact and with whom one of the further communication agents (AG-B/G1) is associated, by the further communication agents (AG-B/G1) to the communication agent (AG-A) of the searching subscriber if the desired communications partner having the desired properties is found;
   - Outputting additional information, via the communication agent (AG-A) of the searching subscriber, regarding the contact found in the first group to a man/machine interface (MMI).

2. Method for finding a contact in accordance with claim 1, in which the communication agent (AG-A) of the searching subscriber outputs further information regarding a plurality of contacts found in the first group.

3. Method for finding a contact in accordance with claim 2, Whereby the information regarding the plurality of contacts found in the first group in each case contains information pertaining to a type of relationship between the contact and the communications partners (J) in the second group (G2).

4. Method for finding a contact in accordance with claim 2 or 3,
   Whereby the information regarding the plurality of contacts found in the first group in each case contains information about the communications partners (J) in the second group (G2) to whom the contact is linked.

5. Method for finding a contact in accordance with claim 1 With the following additional method steps:

   - Making a request for a connection to be set up to a contact within the first group;
   - and initiating a connection setup to the contact found within the first group.

6. Method for setting up a connection to a contact in accordance with claim 5,
   whereby the output of information regarding the contact found in the first group is undertaken by the communication agent (AG-A) of the searching subscriber using graphic characters on a display unit, and the connection is set up after confirmation has been entered by the searching subscriber.

7. Method for setting up a connection to a contact in accordance with claim 6,
   whereby the communication agent (AG-A) of the searching subscriber outputs further information regarding a plurality of contacts found in the first group,
   whereby the subscriber can select one of the contacts found to whom a connection is to be set up, and
   whereby one of the contacts found is preselected by the communication agent of the searching subscriber.

8. Method for setting up a connection to a contact in accordance with claim 7,
   whereby the information regarding the plurality of contacts found in the first group in each case contains information about a type of relationship between the contact and the communications partners (J) in the second group (G2).

9. Method for setting up a connection to a contact in accordance with claim 7 or 8,
   whereby the information regarding the plurality of contacts found in the first group in each case contains information about the communications partners (J) in the second group (G2) to whom the contact is linked.

10. Method according to one of the previous claims, whereby a number of expected features of the desired communications partner (J) of the second group (G2) entered are linked according to the rules of Boolean algebra.

**Revendications**

**1.** Procédé pour trouver un interlocuteur à l'intérieur d'un premier groupe, qui est en liaison avec un partenaire de communication (J) souhaité à l'intérieur d'un second groupe (G2) défini par des qualités escomptées de ce partenaire de communication, comprenant les étapes de procédé suivantes :

- introduction des qualités escomptées du partenaire de communication (J) souhaité du second groupe (G2) dans un agent de communication (AG-A) attribué à un abonné en quête ;
- transmission de demandes avec l'indication de ces qualités escomptées à une pluralité d'agents de communication (AG-B/G1, AG-C/G1), qui sont attribués respectivement à des personnes à l'intérieur du premier groupe, par l'agent de communication (AG-A) attribué à l'abonné en quête ;
- contrôle d'un fichier de partenaires de communication (DB-B, DB-C) des personnes individuelles du premier groupe par l'agent de communication (AG-B/G1, AG-C/G1) attribué respectivement à ces personnes au niveau des inscriptions de partenaires de communication (J) du second groupe (G2) avec les qualités souhaitées ;
- En cas de présence d'une telle inscription, transmission d'informations concernant l'abonné trouvé comme interlocuteur du premier groupe, auquel est attribué l'agent de communication (AG-B/G1) correspondant, par cet agent de communication (AG-B/G1) à l'agent de communication (AG-A) de l'abonné en quête ;
- sortie d'information concernant l'interlocuteur trouvé du premier groupe par l'agent de communication (AG-A) de l'abonné en quête à une interface homme-machine (MMI).

**2.** Procédé pour trouver un interlocuteur selon la revendication 1, l'agent de communication (AG-A) de l'abonné en quête donnant des informations concernant plusieurs interlocuteurs trouvés du premier groupe.

**3.** Procédé pour trouver un interlocuteur selon la revendication 2,
l'information concernant plusieurs interlocuteurs trouvés du premier groupe contenant respectivement de l'information sur la nature de la liaison entre l'interlocuteur et les partenaires de communication (J) du second groupe (G2).

**4.** Procédé pour trouver un interlocuteur selon la revendication 2 ou 3,
l'information concernant plusieurs interlocuteurs trouvés du premier groupe contenant à chaque fois de l'information sur les partenaires de communication (J) du second groupe (G2), avec lesquels l'interlocuteur est en relation.

**5.** Procédé pour l'établissement d'une liaison avec un interlocuteur selon la revendication 1, avec les étapes supplémentaires de procédé suivantes :

demande d'établissement de liaison avec un interlocuteur à l'intérieur du premier groupe ; et demande d'un établissement de liaison avec l'interlocuteur trouvé du premier groupe.

**6.** Procédé pour l'établissement de liaison avec un interlocuteur selon la revendication 5,
la sortie d'information concernant l'interlocuteur trouvé du premier groupe par l'agent de communication (AG-A) de l'abonné en quête s'effectuant à l'aide de caractères d'écriture sur une unité d'affichage et la demande d'un établissement de liaison intervenant après une entrée de confirmation de l'abonné.

**7.** Procédé pour l'établissement de liaison avec un interlocuteur selon la revendication 6,
l'agent de communication (AG-A) de l'abonné en quête donnant de l'information concernant plusieurs interlocuteurs trouvés du premier groupe,
l'abonné pouvant choisir l'un des interlocuteurs trouvés avec lequel un établissement de liaison doit être demandé, et l'un des interlocuteurs trouvés étant présélectionné par l'agent de communication de l'abonné en quête.

**8.** Procédé pour établir une liaison avec un interlocuteur selon la revendication 7,
l'information concernant plusieurs interlocuteurs trouvés du premier groupe contenant à chaque fois de l'information sur la nature de la liaison entre l'interlocuteur et les partenaires de communication (J) du second groupe (G2).

**9.** Procédé pour établir une liaison avec un interlocuteur selon la revendication 7 ou 8,
l'information concernant plusieurs interlocuteurs trouvés du premier groupe contenant à chaque fois de l'information sur les partenaires de communication (J) du second groupe (G2), avec lesquels l'interlocuteur est en relation.

**10.** Procédé selon l'une quelconque des revendications précédentes, plusieurs qualités entrées escomptées du partenaire de communication (J) souhaité du second groupe (G2) étant associées selon des règles d'algèbre booléen.

AG-A

PU

MMI

COM

DB-A

| B-DATA |
| C-DATA |
| D-DATA |
| E-DATA |
| F-DATA |
| G-DATA |

AG-B  G1

PU

MMI

COM

DB-B

| A-DATA |
| C-DATA |
| D-DATA |
| H-DATA |
| J-DATA |
| K-DATA |

AG-C  G1

PU

MMI

COM

DB-C

| A-DATA |
| B-DATA |
| D-DATA |
| K-DATA |
| L-DATA |
| M-DATA |

J

N

P

R

S

G2